# EUROPÄISCHE PATENTSCHRIFT

(11) **EP 0 462 555 B1**
(45) Veröffentlichungstag und Bekanntmachung des Hinweises auf die Patenterteilung: **02.03.1994**
(21) Anmeldenummer: 91109942.2
(22) Anmeldetag: 18.06.1991
(51) Int. Cl.: B26D 3/28, B26D 3/06, B29C 65/00

(54) **Vorrichtung zum Herausschneiden von Armierungselementen aus einer Gummi- oder Kunststoffmatrix**
Apparatus for cutting steel cords from a rubber matrix
Appareils pour couper des fils d'armatures dans une matrice en caoutchouc

(30) Priorität: 19.06.1990 DE 4019511
(43) Veröffentlichungstag der Anmeldung: 27.12.1991
(73) Patentinhaber: STAHLGRUBER Otto Gruber GmbH & Co., 81675 München (DE)
(72) Erfinder:
(74) Vertreter: Beetz & Partner Patentanwälte

(56) Entgegenhaltungen:
- GB-A- 1 279 934
- US-A- 4 143 565
- US-A- 4 618 387

## Beschreibung

Die Erfindung betrifft eine Vorrichtung zum Herausschneiden von langgestreckten Armierungselementen, wie beispielsweise Stahlseilen aus einer Gummi- oder Kunststoffmatrix, wie beispielsweise Fördergurten.

In verschiedenen technischen Gebieten besteht die Notwendigkeit, die in eine schneidfähige Matrix aus beispielsweise Gummi oder Kunststoff eingebetteten hochfesten Armierungselemente, wie beispielsweise Metallseile oder -stränge, herauszutrennen, um die einzelnen Komponenten gesondert zu verwerten oder an ihnen bestimmte Arbeiten und Behandlungen auszuführen.

Eines dieser technischen Gebiete, bei dem hochfeste langgestreckte Armierungen aus der Matrix über eine gewisse Länge herausgeschnitten werden müssen, ist das Verbinden der beiden Enden eines Stahlseil-Fördergurtes zur Herstellung, Längung oder Kürzung eines endlosen Förderbandes. Bei der bisher allgemein angewandten Verbindungstechnik werden alle anfallenden Arbeiten von Hand durchgeführt, was insbesondere bei breiten Fördergurten einen hohen Personal- und Zeitaufwand erforderte. In einem ersten Arbeitsvorgang müssen die Gummidecken der Trag- und Laufseiten beider Gurtenden in einer zuvor festgelegten Verbindungslänge mit speziellen Messern bis dicht über die eingebetteten Stahlseile abgeledert (abgeschnitten) werden. In einem anschließenden Arbeitsvorgang wird der Gummi zwischen benachbarten Stahlseilen mit einem speziellen Gummimesser herausgeschnitten, wobei allerdings die Stahlseile noch von einer Gummischicht umhüllt sein sollten, um die spätere Vulkanisation der Verbindungsplatten nicht zu beeinträchtigen. Die freigeschnittenen noch mit Gummi umhüllten Stahlseile werden anschließend einzeln mit einem geeigneten Werkzeug, z. B. einer rotierenden Rillenbürste, von allen Seiten leicht angerauht, wobei auch bei diesem Vorgang darauf geachtet werden muß, daß die Gummischicht nicht zerstört wird. Daraufhin werden der Rohstaub und andere Verunreinigungen der aufgerauhten Stahlseile mit Hilfe von Bürsten und ggf. eines geeigneten Reinigungsmittels entfernt. Die auf diese Weise an jedem Gurtende über die Verbindungslänge freigelegten Stahlseile werden nach ein- oder mehrmaligem Bestreichen mit einer Vulkanisierlösung auf einer vorbereiteten unteren Verbindungsplatte in einem ein- oder mehrstufigen Verbindungssystem von Hand aufgelegt und die verbleibenden Zwischenräume mit Gummistreifen ausgefüllt. Anschließend wird eine vorbereitete obere Verbindungsplatte auf die Lage aus ein- oder mehrstufig nebeneinanderliegenden Stahlseilen aufgelegt, woraufhin die Vulkanisation in einer speziellen beheizten Presse erfolgt. Von den vorstehend kurz erläuterten Vorgängen ist das Herausschneiden der Vielzahl von Einzeldrähten die zeit- und arbeitsaufwendigste Maßnahme, die hohe Anforderungen an das Personal stellt und mit relativ schwerer körperlicher Arbeit verbunden ist.

Aus US-A-4 143 563 ist eine stationäre Anlage zum Herausschneiden der verschlissenen Gummischicht eines Förderbandes bekannt.

Aufgabe der Erfindung ist es, das Herausschneiden von Armierungselementen aus einer schneidfähigen Gummi- oder Kunststoffmatrix zu vereinfachen und eine Vorrichtung zu schaffen, mit der bei erhöhter Effektivität die manuellen Arbeiten wesentlich vermindert bzw. beseitigt werden können.

Diese Aufgabe wird erfindungsgemäß durch die im Patentanspruch 1 angegebene Vorrichtung gelöst. Die Positionierung eines Untermessers und eines Obermessers in dem von einem gesonderten Antrieb verfahrbaren Tragrahmen bewirkt, daß bei jeder Fahrbewegung ein Schnitt oberhalb und unterhalb eines Armierungselements ausgeführt wird, wobei durch die besondere Formgebung der Schneidkante sich die beiden Teilschnitte zu einem Vollschnitt ergänzen und damit von jeder Messerpaarung ein Armierungselement aus der Gummi- bzw. Kunststoffeinbettung herausgeschnitten wird. Da bei jedem dieser Schnittvorgänge auch die obere und untere Deckschicht mittels spezieller Schneidkanten am Unter- und Obermesser geschnitten wird, liegt das Armierungselement nach einem Schneidvorgang frei.

Gemäß einer zweckmäßigen Weiterbildung der Erfindung weist das Unter- und Obermesser einen an die bevorzugt bogenförmige Schneidkante anschließenden bogenförmigen Führungsabschnitt auf, der eine Selbstzentrierung des Messers während des Schneidvorganges auf die Längsachse des Armierungselementes bewirkt und gewährleistet, daß die Schnittlinie der bogenförmigen Schneidkante in einem wählbaren Abstand zur Oberfläche des Armierungselementes verläuft und somit das herausgeschnittene Armierungselement von einer gleichbleibend dicken Gummischicht ummantelt ist. Die Schnittführung und damit die Wandstärke dieser Mantelschicht kann durch Verstellen der Lage des Unter- und Obermessers auf einen optimalen Betrag eingestellt werden. Darüber hinaus sind die Messer und die zweckmäßig als Druckrollen ausgebildeten Gegenhalter jeweils einzeln verstellbar angeordnet, um die Vorrichtung auf einfache Weise an unterschiedliche Formen und Dicken der Gummi- bzw. Kunststoffmatrix, insbesondere der Dicke eines Fördergurtes, anpassen zu können.

Zweckmäßig besteht der Tragrahmen aus zwei gegeneinander relativbeweglichen Teilen, die eine seitliche Aufnahmeöffnung für die Gummi- oder Kunststoffmatrize begrenzen und zum Einführen der Matrize vor einem Schneidvorgang auseinandergespreizt und nach dem Einführen ggf. mittels einer Schraubspindel in die Betriebsstellung zusammengefahren werden, wobei eine Stellschraube den für den jeweiligen Schnittvorgang geeigneten Abstand zwischen beiden Rahmenteilen bestimmt.

Weitere vorteilhafte Ausgestaltungen und Weiterbildungen der Erfindung sind Gegenstand der Unteransprüche.

Die erfindungsgemäße Vorrichtung hat den Vorteil, daß die bisher langwierigen und anstrengenden körperlichen Arbeiten beim Herausschneiden von langgestreckten hochfesten Armierungselementen aus ihrer Gummi- bzw. Kunststoffmatrix auf ein Mindestmaß reduziert werden. Dies gilt insbesondere bei der Herstellung von Verbindungen zweier mit Stahlseilen armierter Fördergurtenden, deren Stahlseile mit der erfindungsgemäßen Vorrichtung nahezu ohne manuelle Arbeiten herausgeschnitten werden können, wobei mehrere der bisher notwendigen Arbeitsvorgänge, wie Abledern der oberen und unteren Gurtschichten, Aufrauhen und Reinigen der verbleibenden Stahlseilummantelung sowie schließlich die Schnitte mit Handmessern, wegfallen. Der bisher für die Verbindung eines breiten Stahlseil-Gurtbandes benötigte Zeit- und Arbeitsaufwand kann auf einen Bruchteil der bisher erforderlichen Spanne verkürzt werden, was einen außerordentlich hohen wirtschaftlichen Effekt hat.

Darüber hinaus lassen sich die verbleibenden Arbeiten auch von relativ ungeschultem Personal durchführen.

Weitere Besonderheiten und Vorzüge der erfindungsgemäßen Vorrichtung lassen sich der Zeichnung und der Beschreibung eines Ausführungsbeispiels entnehmen. Es zeigen:
- Fig. 1: eine erfindungsgemäße Schneidvorrichtung in Seitenansicht;
- Fig. 2: die Schneidvorrichtung in der Stirnansicht II-II in Fig. 1;
- Fig. 3: ein Messer in perspektivischer Darstellung.
- Fig. 4: einen Schneidvorgang mit einem Messer nach Fig. 3

Die dargestellte Schneidvorrichtung zum Herausschneiden der Stahlseile aus einem Fördergurt enthält einen Rahmen 1, der mittels vier Laufrollen 2 auf einer ebenen Auflage 3 abrollt. Am vorderen Ende des Rahmens 1 ist ein mit einem nicht dargestellten Antrieb gekoppeltes Zugseil 4 befestigt, mit dem die Schneidvorrichtung in Längsrichtung eines Gurtbandes 5 gezogen wird, das in einer seitlichen Öffnung 6 des Rahmens aufgenommen ist. Im zentralen Kernbereich des Gurtbandes 5 sind Stahlseile 7 als Armierungselemente eingebettet, die mit Hilfe der Schneidvorrichtung in der im folgenden erläuterten Weise herausgeschnitten werden. Der Rahmen 1 besteht aus zwei Hauptteilen 8 und 9, die über ein Gelenk 10 miteinander verbunden sind, wobei das vordere Laufrollenpaar 2 am Rahmenteil 8 und das hintere Rollenpaar 2 am Rahmenteil 9 gelagert sind. Beide Rahmenteile 8, 9 können mit Hilfe einer durch eine Handkurbel 11 gegen die Wirkung einer Feder 12 betätigbaren Schraubspindel 13 gegeneinander verstellt werden, deren Gewindehülse 14 auf dem schwenkbaren unteren Rahmenteil 9 befestigt ist. Um das Gurtband 5 in die Aufnahmeöffnung 6 einführen zu können, wird die Schraubspindel 13 aus der Gewindehülse 14 herausgeschraubt, wodurch sich die Öffnung 6 entsprechend vergrößert.

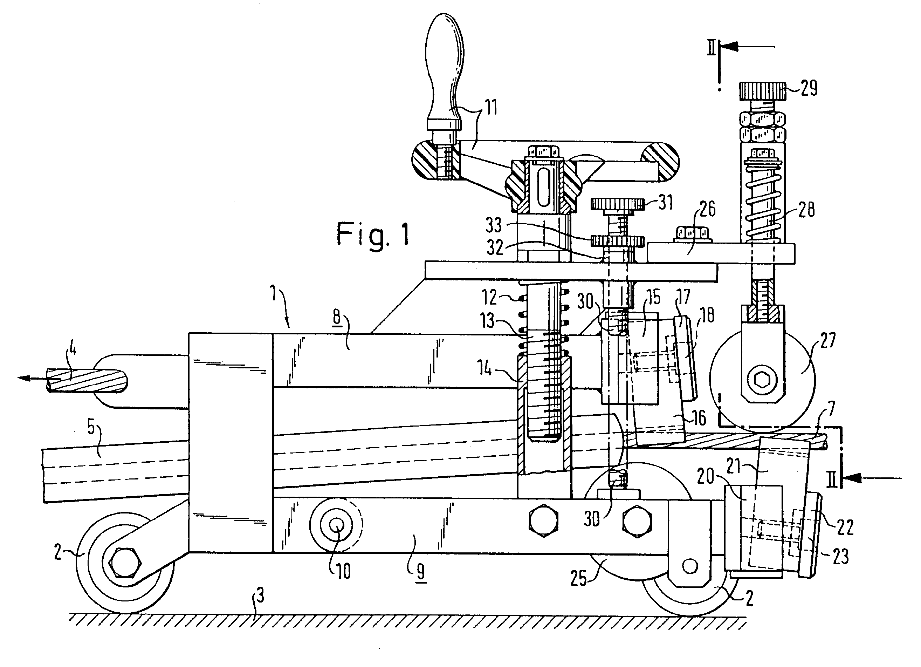

Am oberen Rahmenteil ist eine verstellbare Halterung 15 befestigt, in der ein Obermesser 16 mit Hilfe einer Klemmplatte 17 und einer Schraube 18 lösbar fixiert ist. Im unteren Rahmenteil 9 ist eine einstellbare Halterung 20 für ein Untermesser 21 vorgesehen, das in gleicher Weise wie das Obermesser 16 mittels einer Klemmplatte 22 und einer Schraube 23 in der Halterung lösbar festgeklemmt wird. Unterhalb des Obermessers 16 ist im unteren Rahmenteil 9 ein als Druckrolle 25 ausgebildeter Gegenhalter gelagert, dessen Lauffläche gegen die Unterseite des Gurtbandes 5 drückt (vgl. Fig. 1). In entsprechender Weise ist oberhalb des Untermessers 21 ein als Druckrolle 27 ausgebildeter Gegenhalter vorgesehen, der an einer am oberen Rahmenteil 8 befestigten Platte 26 festgelegt und in seiner Höhenlage mittels arretierbarer Stellschrauben 28, 29 eingestellt werden kann.

Der Abstand zwischen den beiden Rahmenteilen 8 und 9 und damit die Lage des am oberen Rahmenteil 8 festgelegten Obermessers 16 gegenüber dem am unteren Rahmenteil 9 gelagerten Gegenhalter 25 wird durch eine Stellschraube 30 bestimmt, die sich mit ihrem unteren Ende auf dem Rahmenteil 9 abstützt und mittels eines Rändelkopfes 31 in einer entsprechenden Führung 32 am oberen Rahmenteil 8 verstellt werden kann. Zur Lagesicherung ist eine gerändelte Mutter 33 vorgesehen.

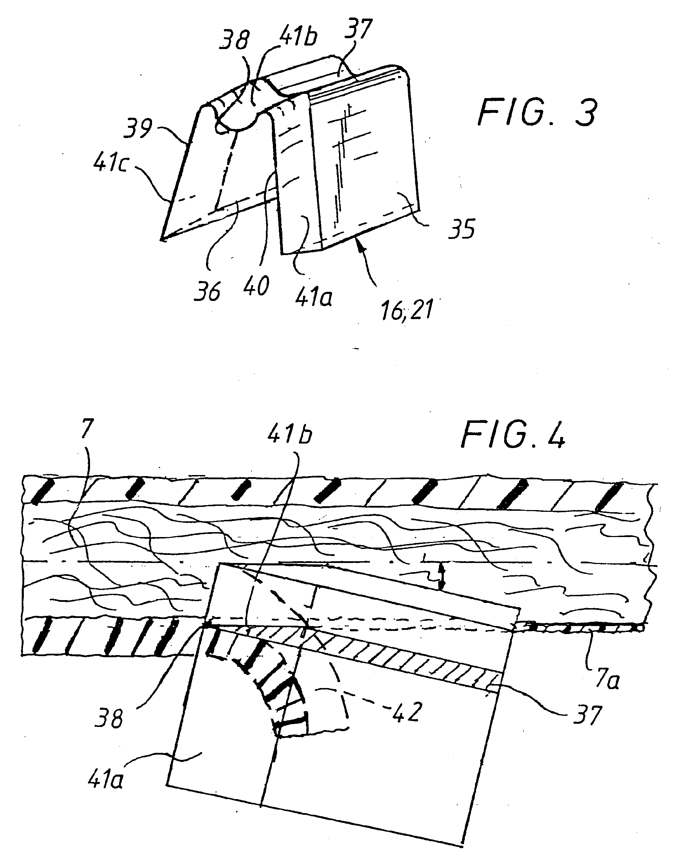

Wie aus Fig. 3 ersichtlich, bestehen die beiden gleich ausgebildeten Messer 16, 21 aus einem durch Biegen geformten Blechzuschnitt aus z.B. Federstahl. Zwei im wesentlichen geradlinige Seitenschenkel 35, 36 sind durch einen teilzylindrisch eingebogenen Mittelsteg 37 miteinander verbunden. An der Vorderseite ist im Mittelsteg 37 eine Schneidkante 38 ausgebildet, die in je einen Schneidkantenabschnitt 39, 40 an den beiden Schenkeln 35, 36 übergeht. An diese Schneidkanten 38 bis 40 schließt eine durchgehende Schrägfläche 41 an, die aus den Abschnitten 41a, 41b und 41c an den beiden Seitenschenkeln 35, 36 und dem Mittelsteg 37 besteht. Diese Schrägfläche 41 geht in die Außenfläche des Blechzuschnitts über. Wie insbesondere aus Fig. 1 und 4 ersichtlich, sind die beiden Messer 16, 21 unter einem spitzen Winkel α zur Längsachse des jeweiligen Stahlseils 7 orientiert, wobei dieser spitze Winkel α der Neigung der Schrägfläche 41 gegenüber der jeweiligen Außenfläche 35, 37 des Zuschnitts entspricht und nur wenige Grad beträgt. Auf diese Weise wird eine optimale Schnittwirkung und durch die Schrägflächenabschnitte 41a, 41b, 41c eine Selbstzentrierung des Messers gegenüber dem Stahlseil 7 erzielt, mit der Folge, daß das herausgeschnittene Stahlseil eine Gummiummantelung 7a von konstanter Wandstärke besitzt. Gleichzeitig wird bei jedem Schnittvorgang vom Obermesser 16 und vom Untermesser 21 je ein durchgehender stegförmiger Streifen 42 aus der Ober- bzw. der Unterschicht des Gurtes herausgeschnitten, so daß nach Vollendung aller Schneidvorgänge der Gurt in Form einer Vielzahl von Streifen sowie der herausgeschnittenen Armierungsseile 7 vorliegt (vgl. Fig. 4).

Die vorstehend im einzelnen beschriebene Vorrichtung arbeitet in folgender Weise:

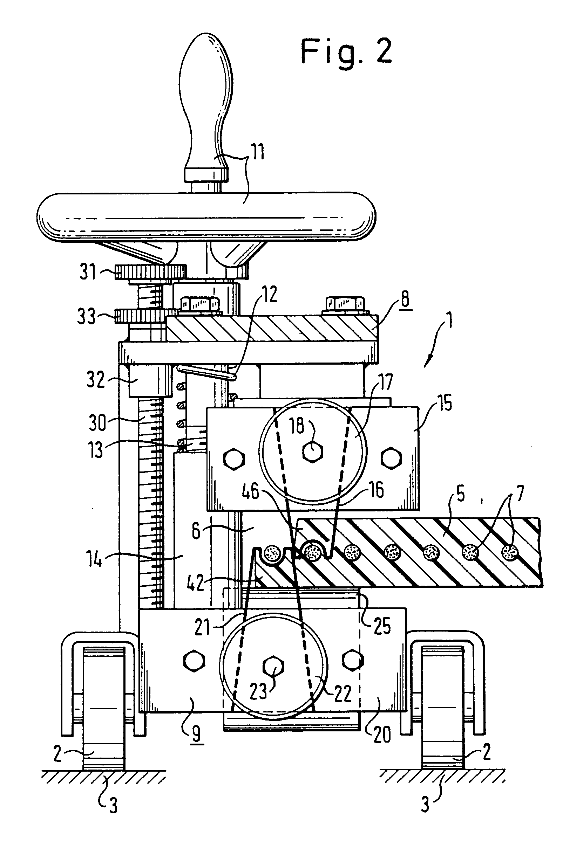

Bei einem auf der ebenen Unterlage 3 aufliegenden Fördergurt werden in einem vorbestimmten Abstand, welcher der Verbindungslänge des jeweiligen Gurtendes entspricht, die Stahlseile auf einem kurzen Abschnitt von nur wenigen Zentimetern von Hand mit Hilfe üblicher Schneidmesser freigelegt. Daraufhin wird die Vorrichtung seitlich so an eine Gurtkante angesetzt, daß der eine Gurtrand in die seitliche Öffnung 6 eingreift. Um diesen Einführvorgang zu ermöglichen, ist der Rahmenoberteil 8 durch Verdrehen der Handkurbel 11 gegenüber dem auf der Unterlage 3 mittels der Laufrollen 2 aufliegenden Rahmenunterteil 9 angehoben. Durch erneutes Verdrehen der Handkurbel wird der Rahmenoberteil in die in Fig. 1 dargestellte Position gegenüber dem Rahmenunterteil abgesenkt, wobei die untere Druckrolle 25 an die Unterfläche des Gurtes und die obere Druckrolle 27 an der Oberfläche eines Stahlseils 7 zur Druckauflage kommt, und zwar in der in Fig. 1 dargestellten Weise, d. h. jeweils unter- bzw. oberhalb des zugehörigen Schneidmessers 16 bzw. 21. Der geeignete Abstand der als unterer Gegenhalter wirkenden Druckrolle 25 wurde durch Betätigen der Stellschraube 30 eingestellt, welche beim Zustellen des Oberrahmens 8 mittels der Kurbel 11 auf einer am Unterrahmen 9 befestigten Platte zur Anlage kommt. Die gesonderte Einstellung der als oberer Gegenhalter wirkenden Druckrolle 27 erfolgt durch Betätigung der Stellschrauben 28, 29. Anschließend wird die Vorrichtung mittels des nicht dargestellten Antriebes und des Zugelementes 4 in Längsrichtung des Gurtes auf der Unterlage 3 gezogen, wobei das Obermesser 16 und gleichzeitig das Untermesser 21 je einen Schnitt ausführen. Durch die seitliche Versetzung dieser beiden Messer 16, 21 schneidet in der in Fig. 2 dargestellten Weise das Untermesser 21 das jeweils außenliegende Stahlseil 7 und das Obermesser 16 das jeweils benachbarte Stahlseil 7 aus dem Fördergurt heraus, wobei jeweils ein Streifen 42 bzw. 43 anfällt. Nach Durchführung eines solchen Schneidvorganges bis zum jeweiligen Gurtende wird die Vorrichtung in ihre Ausgangsposition zurückgefahren und nach dem Herausbiegen des jeweiligen Stahlseils 7 an den neu gebildeten Rand des Gurtes angesetzt, woraufhin durch eine erneute Längsbewegung der Vorrichtung sich der Schneidvorgang wiederholt.

Bei der dargestellten Vorrichtung handelt es sich um ein kompaktes und leichtgewichtiges Handgerät, das von nur einem Operator bedient wird. Eine Führung des Gerätes während des Schneidvorganges von Hand ist nicht oder nur in Ausnahmefällen notwendig, weil durch die erfindungsgemäße Ausbildung der Ober- und Untermesser eine Selbstführung der Messer und damit des gesamten auf der tischförmigen Unterlage abrollenden Geräts entlang der zueinander parallel im Gurt ausgerichteten Stahlseile 7 erfolgt. Durch Verwendung eines solchen Handgerätes können eine Vielzahl der beim Stand der Technik erforderlichen Arbeitsgänge wegfallen, was zu einer wesentlichen Einsparung von Mannstunden bei der Herstellung von hochfesten Verbindungen zweier Fördergurt-Enden führt.

Langgestreckte Armierungen aus Metallseilen, Metallstäben od. dgl. aus einer gummi- bzw. kunststoffartigen Matrix können herausgeschnitten werden, was beispielsweise bei der Aufbereitung bzw. Entsorgung von derartigen Verbundmaterialien notwendig ist. Insbesondere können gebrauchte bzw. völlig verschlissene mit Stahlseilen armierte Fördergurte, wie sie beispielsweise in Tagebauen eingesetzt werden, zum Zwecke der Entsorgung durch Heraustrennen der Stahlarmierungen aus der Gummimatrix aufbereitet werden. In diesem Falle ist es zweckmäßig, wenn die Schneidvorrichtung eine Vielzahl von nebeneinander angeordneten Ober- und Untermessern besitzt, um mit einem einzigen Schneidvorgang eine entsprechend große Anzahl an Stahlseilen herausschneiden zu können. Unter Umständen würde bei einem derartigen Gerät auch lediglich ein Satz von Obermessern genügen, weil die Armierungsseile nach einem vollständigen Abtragen der oberen Gummilage aus ihren jeweiligen Betten schräg nach oben herausgebogen bzw. -gezogen werden können. Schließlich könnten nach dem erfindungsgemäßen Schneidprinzip mit profiliertem Ober- und Untermesser auch die Wulstkerne von verschlissenen Fahrzeugreifen herausgeschnitten werden, wobei in diesem Falle die Schneidvorrichtung stationär über einer drehangetriebenen Fixiervorrichtung für einen Reifen angeordnet werden sollte.

## Patentansprüche

1. Vorrichtung zum Herausschneiden von langgestreckten Armierungselementen, (7) wie Stahlseilen, aus einer Gummi- oder Kunststoffmatrix, wie einem Fördergurt (5),
**gekennzeichnet durch**
- einen in Längsrichtung der Armierungselemente (7) mittels eines motorischen Antriebs verfahrbaren Tragrahmen (1),
- ein im Tragrahmen (1) angeordnetes Untermesser (21), dessen profilierte Schneidkante (38) einen unteren Umfangsteil eines Armierungselements (7) in einem wählbaren Zwischenabstand umgibt, ein im Tragrahmen (1) angeordnetes Obermesser (16), dessen profilierte Schneidkante (38) einen oberen Umfangsteil eines Armierungselementes (7) in einem wählbaren Zwischenabstand umgibt, und
- je einen im Tragrahmen (1) angeordneten Gegenhalter (25, 27) für das Untermesser (21) und das Obermesser (16).

2. Vorrichtung nach Anspruch 1,
dadurch gekennzeichnet,
daß das Untermesser (21) und das Obermesser (16) einen an ihre jeweils bogenförmige Schneidkante (38) anschließenden Führungs- und Zentrierabschnitt (37) für das jeweilige Armierungselement aufweisen.

3. Vorrichtung nach Anspruch 1 oder 2,
dadurch gekennzeichnet,
daß die Lage des Untermessers (21) und des Obermessers (16) einstellbar ist.

4. Vorrichtung nach einem der Ansprüche 1 bis 3,
dadurch gekennzeichnet,
daß der jeweilige Abstand zwischen den als Druckrollen ausgebildeten Gegenhaltern (25, 27) und den jeweils zugehörigen Messern (21, 16) einstellbar ist.

5. Vorrichtung nach einem der Ansprüche 1 bis 4,
dadurch gekennzeichnet,
daß die gleich ausgebildeten Messer (16, 21) aus einem Federstahlzuschnitt gebogen sind und zwei in verstellbaren Halterungen (15; 20) fixierbare Schenkel (35, 36) mit je einem Schneidkantenabschnitt (39, 40) sowie einen zylindrisch eingebogenen Mittelteil mit der innen angeschrägten Schneidkante (38) aufweisen.

6. Vorrichtung nach Anspruch 5,
dadurch gekennzeichnet,
daß die Messer (16, 21) so in den Halterungen (15, 20) eingespannt sind, daß die innere Schrägfläche (41) der Schneidkante (38) konzentrisch zum Arretierelement (7) verläuft.

7. Vorrichtung nach einem der Ansprüche 1 bis 6,
dadurch gekennzeichnet,
daß der Tragrahmen (1) aus zwei Teilen (8, 9) besteht, die zum Einführen der Matrize (5) in eine seitliche Aufnahmeöffnung (6) gegeneinander bewegbar und nach dem Einführen der Matrize gegeneinander arretierbar sind.

8. Vorrichtung nach einem der Ansprüche 1 bis 7,
dadurch gekennzeichnet,
daß ein Zugorgan (4) des Antriebs am Tragrahmen (1) befestigbar ist.

9. Vorrichtung nach einem der Ansprüche 1 bis 8,
dadurch gekennzeichnet,
daß das Untermesser (21) mit dem zugehörigen Gegenhalter (27) gegenüber dem Obermesser (16) und dessen zugehörigem Gegenhalter (25) in Längsrichtung und in Querrichtung versetzt angeordnet sind.

10. Vorrichtung nach Anspruch 7 oder 9,
dadurch gekennzeichnet,
daß das Untermesser (21) und der Gegenhalter (25) des Obermessers an dem Unterteil (9) und das Obermesser (16) zusammen mit dem oberen Gegenhalter (27) für das Untermesser (21) am oberen bewegbaren Rahmenteil (8) angeordnet sind.

11. Vorrichtung nach einem der Ansprüche 1 bis 10,
dadurch gekennzeichnet,
daß die beiden Rahmenteile (8, 9) mittels einer Handkurbel und einer Schraubspindel (13) gegen die Kraft einer Feder (12) verschwenkbar sind, wobei die jeweilige Betriebslage durch eine voreingestellte Stellschraube (30) festgelegt ist.

12. Vorrichtung nach einem der vorhergehenden Ansprüche,
dadurch gekennzeichnet,
daß im Tragrahmen (1) eine Vielzahl von Ober- und Untermessern in einem seitlichen Abstand voneinander angeordnet sind, welcher der Teilung der Armierungselemente in der Matrize entspricht.

## Claims

1. A device for cutting elongate reinforcing elements (7), such as steel cables, out of a rubber or plastics matrix such as a conveyor belt (5), characterised by
- a bearing frame (1) movable by a motor drive in the longitudinal direction of the reinforcing elements (7),
- a bottom knife (21) disposed in the frame (1) and having a sectional cutting edge (38) surrounding a bottom peripheral part of a reinforcing element (7) at a selectable distance, a top knife (16) disposed in the frame (1) and having a sectional cutting edge (38) surrounding a top peripheral part of a reinforcing element (7) at a selectable distance, and
- co-operating holders (25, 27) for the bottom knife (21) and the top knife (16) each disposed in the frame (1).

2. A device according to claim 1, characterised in that the bottom knife (21) and the top knife (16), adjacent their respective arcuate cutting edge (38), have a portion (37) for guiding and centring the respective reinforcing element.

3. A device according to claim 1 or 2, characterised in that the position of the bottom knife (21) and the top knife (16) is adjustable.

4. A device according to any of claims 1 to 3, characterised in that the respective distance between the holders (25, 27), in the form of pressure rollers, and the associated knives (21, 16) is adjustable.

5. A device according to any of claims 1 to 4, characterised in that the knives (16, 21), which have the same construction, are bent from a spring steel blank and have two limbs (35, 36) securable in adjustable holders (15; 20) and each with a cutting-edge portion (39, 40) and also have a cylindrically bent middle part with an inwardly bevelled cutting edge (38).

6. A device according to claim 5, characterised in that the knives (16, 21) are so clamped in the holders (15, 20) that the bevelled inner surface (41) of the cutting edge (38) extends concentrically with the locking element (7).

7. A device according to any of claims 1 to 6, characterised in that the frame (1) consists of two parts (8, 9) which are movable in opposite directions for inserting the matrix (5) into a lateral opening (6) and are lockable against one another after the matrix has been inserted.

8. A device according to any of claims 1 to 7, characterised in that a tension means (4) belonging to the drive is secured to the frame (1).

9. A device according to any of claims 1 to 8, characterised in that the bottom knife (21) and the associated holder (27) are offset in the longitudinal direction and the transverse direction relative to the top knife (16) and the associated holder (25).

10. A device according to claim 7 or 9, characterised in that the bottom knife (21) and the holder (25) of the top knife are disposed on the bottom movable part (9) of the frame and the top knife (16) and the top holder (27) for the bottom knife (21) are disposed on the top movable part (8) of the frame.

11. A device according to any of claims 1 to 10, characterised in that the two frame parts (8, 9) are pivotable by a hand crank and a screw spindle (13) against the force of a spring (12), the respective operating position being fixed by a pre-adjusted set screw (30).

12. A device according to any of the preceding claims, characterised in that a number of top and bottom knives are laterally spaced apart in the frame (1), corresponding to the distribution of the reinforcing elements in the matrix.

## Revendications

1. Appareil pour couper des éléments d'armature allongés (7), comme par exemple des câbles d'acier, hors d'une matrice en caoutchouc ou en matière plastique, comme par exemple une bande convoyeuse (5),
caractérisé en ce qu'il comprend:
- un cadre porteur (1) susceptible d'être déplacé au moyen au moyen d'un entraînement motorisé dans la direction longitudinale des éléments d'armature (7),
- un couteau inférieur (21) agencé dans le cadre porteur (1), dont l'arête de coupe profilée (38) entoure avec un intervalle que l'on peut choisir une partie périphérique inférieure d'un élément d'armature (7), un couteau supérieur (16) agencé dans le cadre porteur (1) dont l'arête de coupe profilée (38) entoure avec un intervalle que l'on choisir une partie périphérique supérieure d'un élément d'armature (7), et
- un élément de contre-support (25, 27) respectif agencé dans le cadre porteur (1) pour le couteau inférieur (21) et le couteau supérieur (16).

2. Appareil selon la revendication 1, caractérisé en ce que le couteau inférieur (21) et le couteau supérieur (16) comportent, à la suite de leurs arêtes de coupe (38) en forme d'arc respectives, un tronçon de guidage et de centrage (37) pour l'élément d'armature respectif.

3. Appareil selon l'une ou l'autre des revendications 1 et 2, caractérisé en ce que la position du couteau inférieur (21) et du couteau supérieur (16) est réglable.

4. Appareil selon l'une quelconque des revendications 1 à 3, caractérisé en ce que la distance respective entre les contre-supports (25, 27), réalisés sous la forme de galets presseurs, et les couteaux associés respectifs (21, 16) est réglable.

5. Appareil selon l'une quelconque des revendications 1 à 4, caractérisé en ce que les couteaux (16, 21), réalisés de la même façon, sont coudés à partir d'une pièce en acier à ressort et comportent deux bras (35, 36), capables d'être fixés dans des supports (15, 20) réglables, qui présentent chacun un tronçon d'arête de coupe (39, 40) ainsi qu'une partie centrale recourbée intérieurement de manière cylindrique, présentant l'arête de coupe (38) en oblique à l'intérieur.

6. Appareil selon la revendication 5, caractérisé en ce que les couteaux (16, 21) sont serrés de telle manière dans les supports (15, 20) que la surface oblique intérieure (41) de l'arête de coupe (38) s'étend concentriquement à l'élément d'armature (7).

7. Appareil selon l'une quelconque des revendications 1 à 6, caractérisé en ce que le cadre porteur (1) est constitué de deux parties (8, 9) qui peuvent être déplacées l'une par rapport à l'autre dans une ouverture de réception latérale (6) afin d'introduire la matrice (5), et qui peuvent être arrêtées l'une par rapport à l'autre après l'introduction de la matrice.

8. Appareil selon l'une quelconque des revendications 1 à 7, caractérisé en ce qu'un organe de traction (4) de l'entraînement peut être fixé sur le cadre porteur (1).

9. Appareil selon l'une quelconque des revendications 1 à 8, caractérisé en ce que le couteau inférieur (21) et le contre-support associé (27) sont agencés de façon décalée dans la direction longitudinale et dans la direction transversale vis-à-vis du couteau supérieur (16) et de son contre-support associé (25).

10. Appareil selon l'une ou l'autre des revendications 7 et 9, caractérisé en ce que le couteau inférieur (21) et le contre-support (25) du couteau supérieur sont agencés sur la partie inférieure (9) du cadre, et le couteau supérieur (16) ensemble avec le contre-support supérieur (27) pour le couteau inférieur (21) sont agencés sur la partie de cadre (8) mobile supérieure.

11. Appareil selon l'une quelconque des revendications 1 à 10, caractérisé en ce que les deux parties de cadre (8, 9) peuvent être basculées au moyen d'une manivelle à main et d'une broche filetée (13) à l'encontre de la force d'un ressort (12), la position de fonctionnement respective étant déterminée par une vis de réglage (30) pré-réglée.

12. Appareil selon l'une quelconque des revendications précédentes, caractérisé en ce qu'une pluralité de couteaux supérieurs et de couteaux inférieurs sont agencés à distance latéralement les uns des autres dans le cadre porteur (1), cette distance correspondant à l'écartement des éléments d'armature dans la matrice.
